(19) Europäisches Patentamt
European Patent Office
Office européen des brevets

(11) Veröffentlichungsnummer: **0 455 030 B1**

(12) **EUROPÄISCHE PATENTSCHRIFT**

(45) Veröffentlichungstag der Patentschrift: **14.12.94**

(51) Int. Cl.⁵: **C08L 23/28**, C08K 5/47, C08K 5/20

(21) Anmeldenummer: **91105922.8**

(22) Anmeldetag: **13.04.91**

(54) **Verfahren zum Vernetzen von halogenhaltigen Polymeren.**

(30) Priorität: **28.04.90 DE 4013714**

(43) Veröffentlichungstag der Anmeldung:
**06.11.91 Patentblatt 91/45**

(45) Bekanntmachung des Hinweises auf die Patenterteilung:
**14.12.94 Patentblatt 94/50**

(84) Benannte Vertragsstaaten:
**DE ES FR GB IT**

(56) Entgegenhaltungen:
**EP-A- 0 336 735**
**FR-A- 2 356 687**

(73) Patentinhaber: **Rhein Chemie Rheinau GmbH**
**Düsseldorfer Strasse 23-27**
**D-68219 Mannheim (DE)**

(72) Erfinder: **Ehrend, Helfried, Dipl.-Ing.**
**Leharstrasse 17**
**W-6720 Speyer (DE)**

(74) Vertreter: **Gremm, Joachim, Dr. et al**
**Bayer AG**
**Konzernverwaltung RP**
**Patente Konzern**
**D-51368 Leverkusen (DE)**

EP 0 455 030 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Vernetzen von halogenhaltigen Polymeren wie chloriertem Polyethylen mit Hilfe von Bis-(2,5-dimercapto-1,3,4-thiadiazol) im folgenden auch BDTD genannt oder Bis-(2,5-dimercapto-1,3,4-thiadiazol)-Derivaten, beispielsweise dem Monobenzoylderivat und basischen Substanzen insbesondere bestimmten Amidaminen.

Aus den deutschen Offenlegungsschriften 2 754 060 und 2 845 125 ist bekannt, gesättigte, halogenhaltige Polymerisate durch Erhitzen in Gegenwart von 2,5-Dimercapto-1,3,4-thiadiazol und eines basischen Materials zu vernetzen. Als basisches Material wird insbesondere eine Kombination aus einer organischen Base und einer anorganischen Base verwendet, wobei als organische Base ein Amin mit einem Siedepunkt über etwa 110° C und einem pK-Wert unter etwa 4,5 infrage kommt. Als bevorzugte Amine werden dabei Dicyclohexylamin und ein Umsetzungsprodukt aus Anilin und Butyraldehyd angegeben.

Diese Amine sind als stark ätzende organische Flüssigkeiten in ihrer Handhabung problematisch und lassen sich nur schwierig in Kautschukmischungen einmischen.

Bei der Vernetzung von chloriertem Polyethylen zeigt sich darüber hinaus, daß bei der Verwendung dieser Amine unbefriedigende Vulkanisateigenschaften, starke Formverschmutzung bei der Herstellung von Formartikeln und schlechte Entformbarkeit beobachtet werden.

Gegenstand dieser Erfindung ist ein Verfahren zum Vernetzen von halogenhaltigen Polymeren wie chloriertem Polyethylen mit Bis-(2,5-dimercapto-1.3.4-thiadiazol) oder dessen Derivaten in Gegenwart eines Amidamins der Formel

$$R\text{-}CO\text{-}NH\text{-}[CH_2\text{-}CH_2\text{-}NH]_n\text{-}CO\text{-}R_1 \qquad (I)$$

worin

- R einen gesättigten oder ungesättigten Kohlenwasserstoffrest mit 6 bis 22 C-Atomen,
- $R_1$ Alkyl, Aryl, Cycloalkyl, Aralkyl oder $R\text{-}COCH_2CH_2$ und
- n eine ganze Zahl von 1 bis 10 bedeuten.

Alkyl kann geradkettig oder verzweigt sein und hat insbesondere 1 bis 18 C-Atome; Aryl hat vorzugsweise 6 bis 12 C-Atome und kann Substituenten wie Halogen, $C_1$-$C_4$-Alkyl, Nitro, Cyano oder $C_1$-$C_4$-Alkoxy tragen; Cycloalkyl hat vorzugsweise 5 bis 8 C-Atome; Aralkyl hat insbesondere 7 bis 12 C-Atome und kann im Arylteil wie das vorstehend genannte Aryl substituiert sein.

Bevorzugte Verbindungen der Formel I entsprechen der Formel II

$$R_2\text{-}CO\text{-}NH\text{-}[CH_2\text{-}CH_2\text{-}NH]\text{-}_m CO\text{-}R_3 \qquad (II)$$

worin

- $R_2$ und $R_3$ gleich oder verschieden sind und für geradkettiges, gesättigtes Alkyl mit 8 bis 18 C-Atomen und
- m für eine ganze Zahl von 2 bis 5 stehen.

Die Verbindungen der Formeln I und II sind im allgemeinen feste, nicht ätzende Substanzen, die sich leicht in Kautschukmischungen einarbeiten lassen.

Das Amidamin wird vorzugsweise in einer Menge von 1 bis 5 Gew.-%, insbesondere 2 bis 4,5 Gew.-%, bezogen auf Kautschuk, eingesetzt. BDTD wird vorzugsweise in einer Menge von 1 bis 4 Gew.-%, insbesondere 2 bis 3 Gew.-%, bezogen auf Kautschuk eingesetzt.

Ein weiterer Gegenstand der Erfindung ist eine Verwendung von Bis-(2,5-dithio-1,3,4-thiadiazol) als Vernetzungsmittel für halogenhaltige Polymere.

Bezüglich der Eigenschaften und Einsatzgebiete von chloriertem Polyethylen, nach ASTM-D 1418 mit CM bezeichnet, wird auf E. Rohde, Kautschuk + Gummi, Kunststoffe 35, 1982, S. 478 ff, verwiesen.

Als halogenhaltiges Polymer kann CM, d.h. ein durch Suspensionschlorierung von Niederdruck-Polyethylen hergestelltes chloriertes Polyethylen mit einem Chlorgehalt von etwa 25 und 45 Gew.-% eingesetzt werden.

Es lassen sich aber auch andere halogenierte Elastomere wie CSM, CO/ECO, CR und CIIR auf die gleiche Weise mit BDTD vernetzen.

Beispiel 1 zeigt den Einfluß von steigenden Mengen Amidamin auf die Aktivierung des Vernetzungsverlaufes einer CM-Mischung mit BDTD. Ohne Zusatz von Amidamin findet keine echte Vernetzung statt, Mit 3-4,5 phr Amidamin stellt sich meist ein Optimum in der Vernetzungscharakteristik ein, Man erhält genügend lange Anvulkanisationszeiten (T 10) und eine kurze Ausvulkanisation (T 90).

| | | A | D | E | F |
|---|---|---|---|---|---|
| CM | | 100 | | | |
| MgO | | 10 | | | |
| Ruß | | 50 | | | |
| Kaolin | | 60 | | | |
| Alkylsulfosäureester | | 20 | | | |
| arom. Mineralöl | | 20 | | | |
| BDTD | | 2,5 | | | |
| Amidamin | | - | 1,5 | 3,0 | 4,5 |
| Elastograph b. 180° C | | | | | |
| F min | (Nm) | 0,051 | 0,046 | 0,032 | 0,031 |
| F max | (Nm) | 0,246 | 0,334 | 0,491 | 0,568 |
| T 10 | (min) | 0,70 | 1,00 | 1,40 | 1,40 |
| T 50 | (min) | 2,70 | 6,30 | 4,90 | 3,30 |
| T 90 | (min) | 16,70 | 18,20 | 13,60 | 9,20 |

Beispiel 2 zeigt einen Vergleich zwischen der oben erwähnten Aktivierung durch stark ätzende Flüssigkeiten wie einem Anilin-Kondensationsprodukt und dem Cyclohexylamin, deren optimale Dosierung ungefähr 1,5 phr beträgt. Demgegenüber muß das im Molgewicht deutlich höher liegende Amidamin auch höher dosiert werden (vgl. Beispiel 1).

Man erhält mit dem Amidamin trotz deutlich höherer Dosierung eine günstigere Anvulkanisationssicherheit (T 10) bei schnellerer Ausvulkanisation (T 90). Außerdem wird die Mischungsviskosität durch das Amidamin gesenkt, was eine bessere Extrudierbarkeit und günstigeres Verhalten bei der IM-Verarbeitung bewirkt. Die Vulkanisatwerte der Mischung mit Amidamin zeichnen sich durch besonders gute Bruchdehnungen aus. Dieser Vorteil zeigt sich auch nach Prüfung des Heißluft- Alterungsverhaltens.

| | | B | C | F |
|---|---|---|---|---|
| CM | | 100 | | |
| MgO | | 10 | | |
| Ruß N-550 | | 50 | | |
| Kaolin | | 60 | | |
| Alkylsulfosäureester | | 20 | | |
| arom. Mineralöl | | 20 | | |
| BDTD | | 2,5 | | |
| Anilin-Kondensationsprodukt | | 1,5 | - | - |
| Cyclohexylamin | | - | 1,5 | - |
| Amidamin | | - | - | 4,5 |
| Elastograph b. 180°C: | | | | |
| F min | (Nm) | 0,047 | 0,049 | 0,031 |
| F max | (Nm) | 0,483 | 0,581 | 0,568 |
| T 10 | (min) | 0,80 | 0,90 | 1,40 |
| T 50 | (min) | 3,30 | 2,70 | 3,30 |
| T 90 | (min) | 15,70 | 12,60 | 9,20 |
| Mischungsviskosität: | | | | |
| ML 1+4/100°C | | 36 | 36 | 30 |
| Vulkanisation 30 min/170°C: | | | | |
| Härte | (ShA) | 82 | 82 | 83 |
| Elastizität | (%) | 13 | 13 | 13 |
| σ100 | (MPa) | 6,7 | 8,0 | 5,3 |
| σ300 | (MPa) | - | - | 8,0 |
| Zugfestigkeit | (MPa) | 7,2 | 8,1 | 8,1 |
| Bruchdehnung | (%) | 190 | 190 | 305 |

| | B | C | F |
|---|---|---|---|
| **Heißluftalterung 7d/125° C:** | | | |
| **Härte (ShA)** | **86** | **86** | **88** |
| **Elastizität ( % )** | **13** | **13** | **13** |
| **Zugfestigkeit (MPa)** | **10,2** | **11,4** | **9,8** |
| **Bruchdehnung ( % )** | **95** | **85** | **160** |

Beispiel 3 zeigt die Vernetzung von chloriertem Polyethylen (CM) mit steigenden Mengen BDTD. Bei der vorliegenden Mischung liegt die optimale Dosierung um 2,0 Gew.-Teile. Dosierungen von 0,5-4,5 Gewichtsteilen sind für andere Rezepturen möglich und üblich.

| (Beispiel 1) | A | B | C | D |
|---|---|---|---|---|
| CM | 100 | 100 | 100 | 100 |
| MgO | 10 | 10 | 10 | 10 |
| Ruß N-550 | 70 | 70 | 70 | 70 |
| HA-Mineralöl | 30 | 30 | 30 | 30 |
| Esterweichmacher | 10 | 10 | 10 | 10 |
| Amidamin-Aktivator | 3,5 | 3,5 | 3,5 | 3,5 |
| BDTD | 1,0 | 1,5 | 2,0 | 2,5 |
| Vulkanisation 20 min/170 °C | | | | |
| Härte (ShA) | 77 | 80 | 82 | 82 |
| Elastizität ( % ) | 16 | 16 | 15 | 15 |
| $\sigma$100 (MPa) | 5,1 | 6,2 | 6,7 | 7,1 |
| $\sigma$300 (MPa) | 12,1 | 13,2 | 13,6 | 13,7 |
| Zugfestigkeit (MPa) | 14,9 | 14,7 | 14,3 | 13,9 |
| Bruchdehnung ( % ) | 430 | 390 | 340 | 320 |

Beispiel 4 zeigt die Vernetzung von EpichlorhydrinKautschuk mit BDTD im Vergleich zu Bleioxid und Ethylenthioharnstoff. Bei vorliegender Dosierung wird mit BDTD bei etwas günstigerer Anvulkanisationszeit ein deutlich höherer Vernetzungsgrad (vgl. Härte, $\sigma$, Bruchdehnung) erreicht.

| (Beispiel 2) | | E | F |
|---|---|---|---|
| Epichlorhydrin-Elastomer | | 60 | 60 |
| Epichlorhydrin-Ethylenoxid-Copolymer | | 40 | 40 |
| 2-Mercapto-benzimidazol | | 1 | 1 |
| Nickeldibutyldithiocarbamat (80 %) | | 1,5 | 1,5 |
| Ruß N-330 | | 15 | 15 |
| Ruß N-550 | | 25 | 25 |
| Bariumcarbonat (80 %) | | 4 | - |
| Harnstoffaktivator | | 2 | - |
| Ethylenthioharnstoff (70 %) | | - | 1,5 |
| Bleimennige (70 %) | | - | 6 |
| BDTD | | 2,5 | - |
| **Anvulkanisation b. 120° C** | | | |
| $t_5$ | (min) | 5,4 | 4,4 |
| $T_{35}$ | (min) | 7,5 | 6,3 |
| **Vulkanisation 20 min/180° C** | | | |
| Härte | (ShA) | 71 | 67 |
| Elastizität | ( % ) | 25 | 23 |
| σ100 | (MPa) | 6,1 | 3,5 |
| Zugfestigkeit | (MPa) | 10,2 | 13,9 |
| Bruchdehnung | ( % ) | 155 | 335 |
| Druckverformungsrest | | 24 | 22 |

Beispiel 5 zeigt einen Vergleich der Vernetzung von CM mit Peroxid bzw. BDTD. Bemerkenswert ist besonders der höhere Weiterreißwiderstand und die günstigere Bruchdehnung, die beim Vernetzen mit BDTD erhalten werden.

| (Beispiel 3) | G | H |
|---|---|---|
| CM (chloriertes Polyethylen) | 100 | 100 |
| Magnesiumoxid | 10 | 10 |
| Ruß N-550 | 60 | 60 |
| Esterweichmacher | 30 | 30 |
| Alterungsschutzmittel | 0,3 | 0,3 |
| Amid-Amin-Aktivator | 5,5 | - |
| BDTD | 2,5 | - |
| Bis-(t-butyl-peroxy-isopropyl)benzol | - | 7 |
| Triallylcyanurat | - | 2,5 |

| Vulkanisation 15 min/170° C | | | |
|---|---|---|---|
| Härte | (ShA) | 74 | 71 |
| Elastizität | ( % ) | 23 | 24 |
| Weiterreißwiderstand | (N/mm) | 24,4 | 15,7 |
| σ100 | (MPa) | 5,1 | 4,8 |
| σ300 | (MPa) | 15,2 | 17,3 |
| Zugfestigkeit | (MPa) | 16,8 | 17,9 |
| Bruchdehnung | ( % ) | 365 | 320 |
| **Druckverformungsrest (%)** | | | |
| 24 h/125° C | | 12 | 11 |
| 24 h/150° C | | 29 | 32 |

Beispiel 6 zeigt, daß sich BDTD sehr gut zur Vernetzung von chlorhaltigen Elastomeren eignet. So ist die Verwendung von DMTD und BMTD, wie eingangs erwähnt, für eine derartige Vulkanisation bekannt. Mit BDTD erreicht man eine Mittelstellung zwischen diesen beiden Vernetzungsmitteln. So ist die Anvulkanisationszeit mit BDTD länger als mit BMTD, aber kürzer als mit DMTD.

DMTD = Dimerkaptothiadiazol

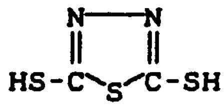

BMTD = Monobenzoyldimercaptothiadiazol

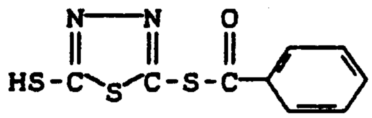

BDTD = Dimeres Dimercaptothiadiazol

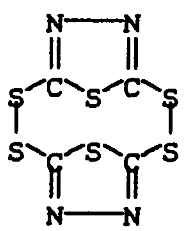

| (Beispiel 4) | | I | K | L |
|---|---|---|---|---|
| CM | | 100 | | |
| MgO | | 10 | | |
| Ruß N-550 | | 70 | | |
| arom. Mineralöl | | 30 | | |
| Alkylsulfonsäureester | | 10 | | |
| Amidamin | | 3,5 | | |
| DMTD | | 2,0 | - | - |
| BMTD | | - | 2,0 | - |
| BDTD | | - | - | 2,0 |
| Vulkanisationsverhalten b. 180° C | | | | |
| ti | (min) | 5,3 | 2,6 | 3,8 |
| F 10 | (dNm) | 30,0 | 31,5 | 28,3 |
| F 24 | (dNm) | 49,0 | 37,0 | 43,5 |
| Vulkanisation 20 min/170° C | | | | |
| Härte | (ShA) | 77 | 79 | 82 |
| Elastizität | ( % ) | 16 | 14 | 15 |
| σ100 | (MPa) | 8,1 | 5,4 | 6,7 |
| σ300 | (MPa) | 14,0 | 12,7 | 13,6 |
| Zugfestigkeit | (MPa) | 14,9 | 14,5 | 14,3 |
| Bruchdehnung | ( % ) | 305 | 400 | 340 |
| Druckverformungsrest | | | | |
| 24 h/100° C | ( % ) | 10 | 9 | 11 |
| 24 h/125° C | ( % ) | 16 | 15 | 13 |

## Patentansprüche

1. Verfahren zum Vernetzen von halogenhaltigen Polymeren wie chloriertem Polyethylen, dadurch gekennzeichnet, daß man Bis-(2,5-dithio-1,3,4-thiadiazol) oder dessen Derivate in Gegenwart eines Amidamin; der Formel

   $R\text{-}CO\text{-}NH\text{-}[CH_2\text{-}CH_2\text{-}NH]_n\text{-}CO\text{-}R_1$ (I)

   , worin
   R einen gesättigten oder ungesättigten Kohlenwasserstoffrest mit 6 bis 22 C-Atomen,

$R_1$ Alkyl, Aryl, Cycloalkyl, Aralkyl oder R-$COCH_2CH_2$ und
n eine ganze Zahl von 1 bis 10 bedeuten. einwirken läßt.

**2.** Verwendung von Bis-(2,5-dithio-1,3,4-thiadiazol) als Vernetzungsmittel für halogenhaltiges Polymer.

## Claims

**1.** Process for curing halogen-containing polymers such as chlorinated polyethylene, characterised in that bis-(2,5-dithio -1,3,4-thiadiaziole) or derivatives thereof are reacted in the presence of an amidamine of the formula

$$R\text{-}CO\text{-}NH\text{-}[CH_2\text{-}CH_2\text{-}NH]_n\text{-}CO\text{-}R_1 \quad (I)$$

wherein
R signifies a saturated or unsaturated hydrocarbon radical having 6 to 22 C atoms,
$R_1$ signifies alkyl, aryl, cycloalkyl, aralkyl or R-$COCH_2CH_2$ and
N signifies an integer of from 1 to 10.

**2.** Use of bis-(2,5-dithio -1,3,4-thiadiaziole) as a curing agent for halogen-containing polymers.

## Revendications

**1.** Procédé pour la réticulation de polymères halogénés, comme du polyéthylène chloré, procédé caractérisé en ce qu'on fait agir du bis-(2,5-dithio-1,3,4-thiadiazole) ou son dérivé, en présence d'une amidamine de formule :

$$R\text{-}CO\text{-}NH\text{-}[CH_2\text{-}CH_2\text{-}NH]_n\text{-}CO\text{-}R_1 \quad (I)$$

dans laquelle
R représente un reste hydrocarboné saturé ou insaturé, comportant 6 à 22 atomes de carbone,
$R_1$ représente un reste alkyle, aryle, cycloalkyle, aralkyle ou R-$COCH_2CH_2$, et
n est un nombre entier valant 1 à 10.

**2.** Utilisation du bis-(2,5-dithio-1,3,4-thiadiazole) comme agent de réticulation pour des polymères halogénés.